## Europäisches Patentamt

## European Patent Office

## Office européen des brevets

(11) Veröffentlichungsnummer: **0 244 694**
**B1**

(12) **EUROPÄISCHE PATENTSCHRIFT**

(45) Veröffentlichungstag der Patentschrift: **12.12.90**

(21) Anmeldenummer: **87105861.6**

(22) Anmeldetag: **22.04.87**

(51) Int. Cl.⁵: **B 60 R 7/04**, B 62 D 33/06

(54) **Ablageanordnung in einem Nutzfahrzeugfahrerhaus.**

(30) Priorität: **26.04.86 DE 3614265**
**27.03.87 DE 3710075**

(43) Veröffentlichungstag der Anmeldung:
**11.11.87 Patentblatt 87/46**

(45) Bekanntmachung des Hinweises auf die
Patenterteilung:
**12.12.90 Patentblatt 90/50**

(84) Benannte Vertragsstaaten:
**DE FR GB IT**

(56) Entgegenhaltungen:
**DE-U-8 321 984**
**FR-A-2 348 843**
**US-A-2 525 952**
**US-A-2 878 945**
**US-A-3 586 099**

(73) Patentinhaber: **Iveco Magirus Aktiengesellschaft**
**Schillerstrasse 2 Postfach 27 40**
**D-7900 Ulm/Donau (DE)**

(72) Erfinder: **Ulrich, Kraus**
**Lichtensteinstrasse 3**
**D-7900 Ulm (DE)**
Erfinder: **Elmar, Egle**
**Sebastian-Fischer-Weg 32**
**D-7900 Ulm (DE)**

(74) Vertreter: **Socha, Peter**
**Iveco Magirus AG Postfach 2740 Schillerstrasse 2**
**D-7900 Ulm (DE)**

Courier Press, Leamington Spa, England.

## Beschreibung

Die Erfindung betrifft eine Ablageanordnung in einem Fahrerhaus eines Nutzfahrzeuges.

Ablageanordnungen mit Tischausbildung zwischen Fahrer- und Beifahrersitz in einem Nutzfahrzeugfahrerhaus sind in verschiedener Ausführungsvariante bekannt (beispielsweise gemäß DE—GM 83 21 983, DE—GM 83 21 984, P 35 01 714.7). Die feste Montage einer Tischanordnung am Fahrerhausboden oder eine aus der Armaturentafel herausklappbare Tischanordnung ist in verschiedener Hinsicht von Nachteil: zum einen sind der Zugriff und die Sicht zu den Bedienungselementen ungünstig und teilweise verdeckt. Dadurch ist die Tischfläche während der Fahrt störend und in der Gebrauchsstellung während der Fahrt mithin umbrauchbar, oder es muß die Tischfläche vergleichsweise klein ausgebildet werden. Darüber hinaus ist ein zusätzlicher Stauraum auf der Motorabdeckung volumenmäßig begrenzt. Somit ist der Durchstieg zwischen den Sitzen nur unter schwierigen Bedingungen möglich. Dieser Zustand wird besonders von Fernfahrern und Fahrern im Lieferverkehr kristisiert.

Aufgabe der Erfindung ist die Schaffung einer Ablageanordnung in einen Nutzfahrzeugfahrerhaus mit Tischausbildung unter Vermeidung der vorgenannten Nachteile, die insbesondere vielseitig verwendbar ist und eine einfache und praktisch zu handhabende Tischanordnung in Verbindung mit einem sich anschließenden großen Stauraum an günstiger Stelle des Fahrerhauses eines Nutzfahrzeuges aufweist.

Gelöst wird die der Erfindung zugrundeliegende Aufgabe durch die im kennzeichnenden teil des Anspruchs 1 angegebenen Mittel. Insbesondere ist in einem zwischen Fahrer- und Beifahrersitz vor der Fahrerhausrückwand gelegenen Schrankelement eine schwenkbare Tischplatte angeordnet, die insbesondere in ihrer im wesentlichen vertikalen Stellung gleichzeitig Abdeckteil zumindest eines Abschnitts bzw. Fachs des Schrankelements ist.

Die Tischplatte besitzt vorzugsweise eine untere horizontale Schwenkachse und weist Abstützstreben auf, die die Tischplatte in der heruntergeklappten Horizontalstellung gegen das Schrankelement abstützen. Die tischplattenfernen Enden der Abstützstreben sind hierbei in einem unteren Bereich des Schrankelements schwenkbar angelenkt, während die anderen Enden der Abstützstreben in Tischplattenseitenführungen mit Anschlag geführt sind.

Das Schrankelement besitzt vorzugsweise ein zusätzliches offenes Ablagefach, welches sich im wesentlichen unter der Tischplatte befindet, wenn diese heruntergeklappt ist.

In weiterer Gestaltung der Erfindung sind die beiden Seitenwände des offenen Ablagefachs in einer Weise nach vorne bis praktisch hin zur Instrumententafel verlängert, das an vorderer Stelle im Bereich der Instrumententafel ein zusätzlicher Boden- oder Tunnelbereich zwischen den beiden Seitenwänden nutzbar gemacht werden kann, und zwar als freie Durchstiegsfläche zwischen den Sitzen. Dieser Boden- oder Tunnel-bereich ist vorzugsweise mit Bodenbelagsmaterial ausgelegt.

Eine besonders einfacher, stabiler und formschöner Aufbau ist gegeben, wenn zumindest die beiden im wesentlichen vertikalen Seitenteile des Schrankelements an der Rückwand oder an der Rückwandverkleidung des Fahrerhausbodens angeformt sind. Auch Decke, Boden und Fächerzwischenböden können an der Rückwand angeformt sein.

Die Tischplatte ist in ihrer das Schrankelement abdeckenden oberen Stellung verschließbar und kann in ihrer unteren horizontalen Gebrauchsstellung mit einer Arretierung versehen sein.

Das Oberteil des Schrankelements kann zweckmäßigerweise als Aufstieg zu einer darüber vorgesehenen Liege ausgebildet und hierzu insbesondere durch eine bügel- oder winkelförmige Konsole verstärkt sein, die an der Rückwand oder am Fahrerhausboden befestigt ist. Die eigentliche Aufstiegsfläche wird vornehmlich durch eine trittfeste Platte oder einen rutschsicheren Bügel gebildet, der mit dem Oberteil des Schrankelements bzw. mit der Konsole verbunden ist.

Durch die Erfindung wird mithin eine einfache Mehrzweckkonstruktion einer Ablageanordnung mit Tischelement vorgeschlagen, die wesentliche Nutzungsvorteile insbesondere im Hinblick als Aufstiegshilfe für eine Liege und als Tisch aufweist. Die Tischfunktion kann während der Fahrt erhalten bleiben, ohne die Handhabung und Sicht auf Bedienungsteile zu beeinträchtigen. Im geschlossenen Zustand wird ein abschließbares Schrankteil gebildet, das ein großes Volumen aufweist. Dessen Anordnung vor der Rückwand zwischen den Sitzen gibt eine sinnvolle Ausnutzung dieses Raums. Ein weiterer Vorteil ist der vordere Freiraum des Fahrerhausbodens, der den ungehinderten Durchstieg zwischen den Sitzen ermöglicht. Das Schrankelement kann integrierter Bestandteil der Rückwand des Fahrerhauses aber auch aus separaten Bauteilen zusammengesetzt sein.

Die Erfindung wird nachfolgend anhand eines Ausführungsbeispiels unter Bezugnahme auf beigefügte Zeichnung näher erläutert; es zeigen:

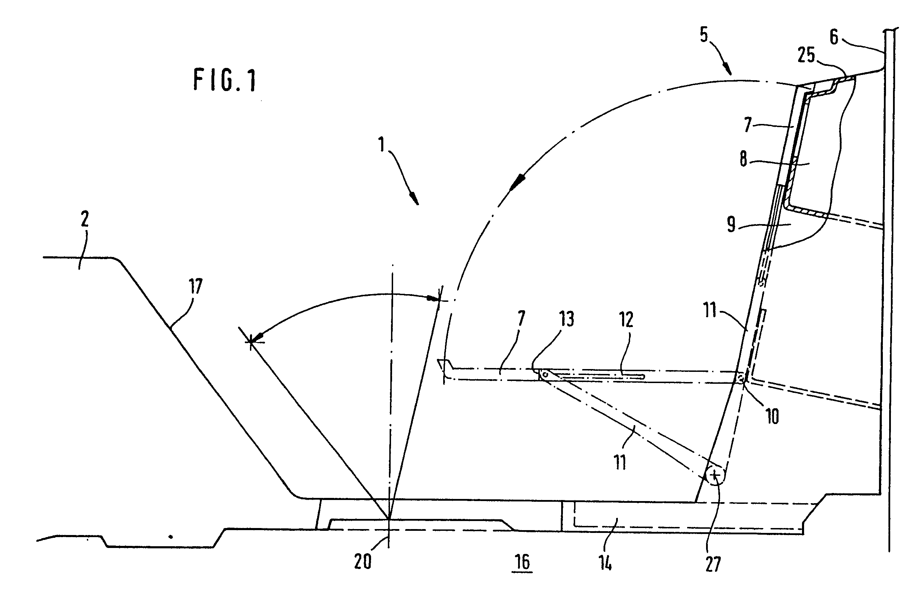

Fig. 1 in schematischer Seitenansicht von der linken Fahrerseite die Ablageanordnung im Nutzfahrzeugfahrerhaus,

Fig. 2 die Ablageanordnung in einer schematischen Draufsicht,

Fig. 3 die Ablageanordnung in einer schematischen Rückansicht gesehen von der Fahrerhauswindschutzscheibe,

Fig. 4 die Ablageanordnung in alternativer Ausgestaltung in schematischer Seitenansicht mit einer oberen Aufstiegshilfe, und

Fig. 5 eine Ablageanordnung ähnlich der Fig. 4.

Die Ablageanordnung (1) gemäß Zeichnung befindet sich in einem Fahrerhaus (2) eines Lastkraftwagens im wesentlichen zwischen Fahrersitz (3) und Beifahrersitz (4) im Bereich der Fahrerhausrückwand (6) und umfaßt ein vertikal bzw.

stehend angeordnetes Schrankelement (5) an der Fahrerhausrückwand (6), welches mit einer vorderen schwenkbaren Tischplatte (7) ausgestattet ist, welche eine untere horizontale Schwenkachse (10) besitzt.

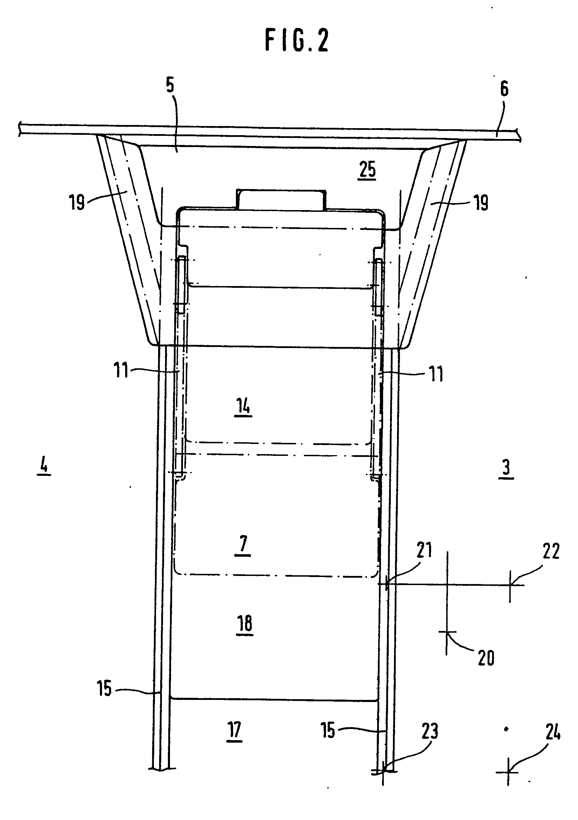

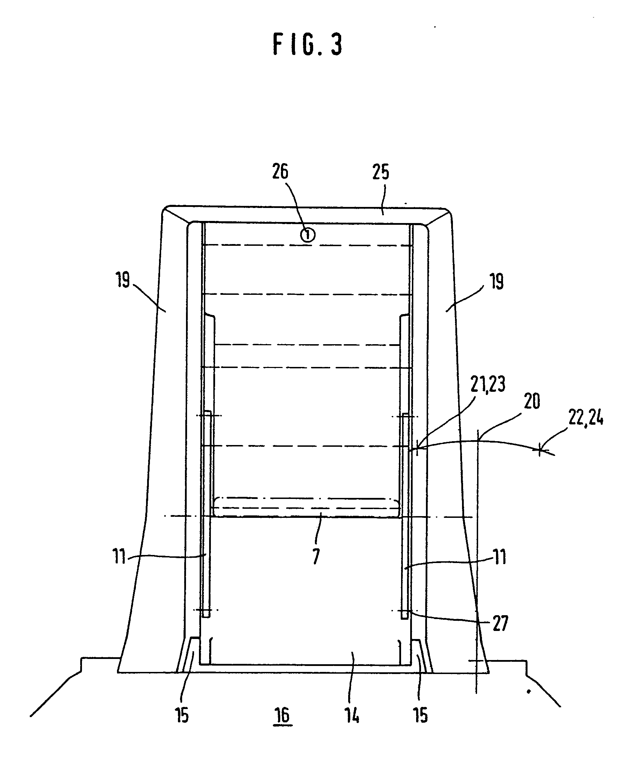

Das Schrankelement selbst besitzt vorzugsweise an der Rückwand (6) des Fahrerhauses integriert angeformte im wesentlichen vertikal verlaufende Seitenteil (19) und eine integriert an der Rückwand (6) angeformte Decke (25), wie dies insbesondere den Fig. 2 und 3 zu entnehmen ist. Im einzelnen sind im Schrankelement (5) unter anderem Fächer (8, 9) angebracht, die durch die Tischplatte (7) abgedeckt werden können, wenn letztere in ihre im wesentlichen vertikale Nichtgebrauchsstellung hochgeschwenkt ist. Durch einen oberen Verschluß (26) im Bereich der Decke (25) kann das Schrankelement (5) abgeschlossen werden.

Bie heruntergeschwenkter im wesentlichen horizontaler Gebrauchsstellung verleihen zwei seitliche Abstützstreben (11) der Tischplatte (7) einen stabilen Halt. Die Abstützstreben (11) sind in einem unteren Bereich (27) des Schrankelements (5) schwenkbar angelenkt und an den anderen Enden verschieblich in Tischplattenseitenführungen (12) geführt, wobei die Seitenführungen (12) einen vorderen Anschlag (13) besitzen, um die horizontale Gebrauchsstellung einer Tischplatte (7) festzulegen. In dieser Gebrauchsstellung kann die Tischplatte eventuell durch einen Klemm- oder Rastmechanismus an den Abstützstreben (11) arretiert werden, so daß die Tischplatte auch während einer Fahrt erschütterungsarm gehalten und gegebenenfalls auch benützt werden kann.

Im wesentlichen unter einer herabgeschwenkten Tischplatte (7) befindet sich mit Abstand ein offenes Ablagefach (14) im Schrankelement (5), welches bei hochgeklappter Tischplatte (7) zugänglich ist. Das Ablagefach (14) weist vorzugsweise parallele vertikale Seitenwände (15) auf, die in vorteilhafter Ausgestaltung der Erfindung bis praktisch zur Instrumententafel (17) des Fahrerhauses (2) reichen und einen zusätzlichen Boden- oder Tunnelbereich zwischen den beiden Seitenwänden und Instrumententafel (17) definieren, welcher mit einem Bodenbelagsmaterial (18) ausgelegt werden kann. Der Boden- oder Tunnelbereich ist auch bei heruntergeklappter Tischplatte (7) von oben frei zugänglich, kann als zusätzliche Abglagefläche benützt werden oder aber auch vorzugsweise als freie Durchstiegsfläche zwischen den Fahrerhaussitzen.

Die Gesamtanordnung ist so getroffen, daß bei heruntergeklappter Tischplatte (7) die Handhabung der und die Sicht auf die Bedienungsteile des Fahrerhauses nicht beeinträchtigt ist. Dies gilt nicht nur für die Instrumente der Instrumententafel (17) selbst, sondern insbesondere auch für den Schaltbereich (20 bis 24) des (nicht veranschaulichten) Gangschalthebels des Fahrzeuggetriebes.

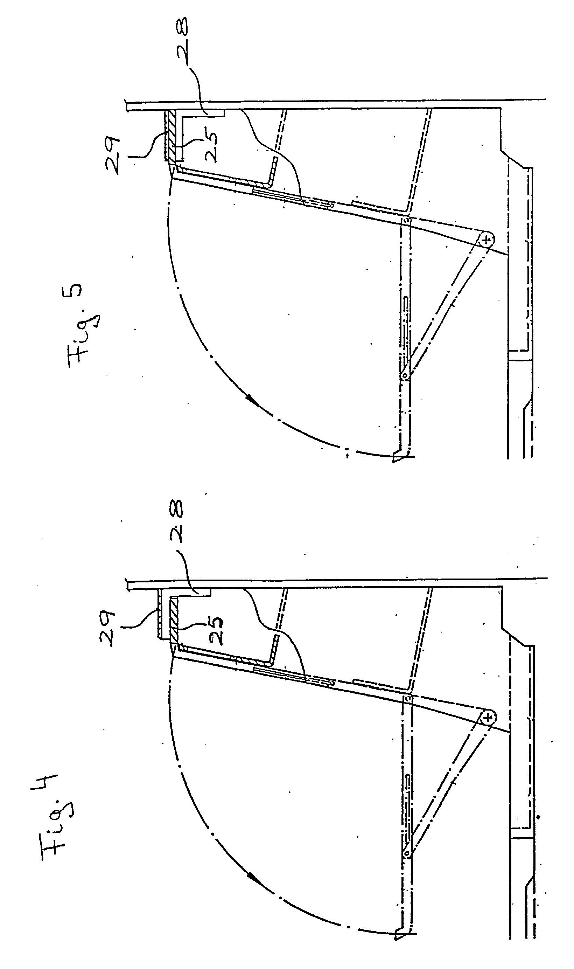

Wie in den Fig. 4 und 5 veranschaulicht, kann dem Schrankoberteil (25) eine weitere Funktion als Aufstiegsfläche zu einer im oberen Bereich des Fahrerhauses angeordneten Liege zukommen.

Sollten die dabei auftretenden Kräfte aus Gründen des konstruktiven Aufbaus oder Materialauswahl nicht allein von dem Schrankteil aufgenommen werden können, ist dafür zusätzlich ein bügelförmiges Teil (28) vorgesehen, das an der Rückwand und/oder am Boden des Fahrerhauses befestigt ist. Der eigentliche Aufstieg erfolgt über eine trittfeste Platte (29) oder einen rutschicheren Bügel. Das bügelförmige Befestigungsteil (28) kann entweder über der Schrankoberfläche gemäß Fig. 4 oder integriert unter dieser gemäß Fig. 5 angebracht sein.

**Patentansprüche**

1. Ablageanordnung (1) in einem Nutzfahrzeugfahrerhaus (2), wobei an einem zwischen Fahrer- und Beifahrersitz (3, 4) vor der Fahrerhaus-Rückwand (6) gelegenen Schrankelement (5) eine schwenkbare Tischplatte (7) angeordnet ist, gekennzeichnet durch die Kombination folgender Merkmale:

   (a) Das Schrankelement (5) ist mit seiner Rückwand an die Rückwand (6) eines Fahrerhauses (2) angrenzend angeordnet,

   (b) die Tischplatte ist in ihrer im wesentlichen vertikalen Stellung gleichzeitig Abdeckteil zumindest eines Abschnitts bzw. Fachs (8, 9) des Schrankelements (5), und

   (c) die Tischplatte (7) besitzt eine untere horizontale Schwenkachse (10).

2. Ablageanordnung nach Anspruch 1, dadurch gekennzeichnet, daß die Tischplatte (7) Abstützstreben (11) aufweist, die die Tischplatte in der heruntergeklappten Horizontalstellung gegen das Schrankelement (5) abstützen, wobei die tischplattenfernen Enden der Abstützstreben (11) in einem unteren Bereich (27) des Schrankelements (5) schwenkbar angelenkt sind und die anderen Enden der Abstützstreben (11) in Tischplattenseitenführungen (12) mit Anschlag (13) geführt sind.

3. Ablageanordnung nach Anspruch 1 oder 2, dadurch gekennzeichnet, daß das Schrankelement (5) ein zusätzliches offenes Ablagefach (14) besitzt, welches sich im wesentlichen unter der Tischplatte (7) befindet, wenn diese heruntergeklappt ist.

4. Ablageanordnung nach Anspruch 3, dadurch gekennzeichnet, daß die beiden Seitenwände (15) des offenen Ablagefachs (14) sich über dem Fahrerhausboden bzw. Mitteltunnel (16) bis praktisch zur Instrumententafel (17) erstecken.

5. Ablageanordnung nach Anspruch 4, dadurch gekennzeichnet, daß an vorderer Stelle im Bereich der Instrumententafel (17) der Boden- oder Tunnelbereich zwischen den beiden Seitenwänden (15) mit Bodenbelagsmaterial (18) ausgelegt ist.

6. Ablageanordnung nach einem der Ansprüche 1 bis 5, dadurch gekennzeichnet, daß zumindest die beiden im wesentlichen vertikalen Seitenteile (19) des Schrankelements (5) an der Rückwand (6) oder -verkleidung des Fahrerhauses (2) angeformt sind.

7. Ablageanordnung nach einem der Ansprüche 1 is 6, dadurch gekennzeichnet, daß die Tischplatte (7) in ihrer das Schrankelement (5) abdeckenden oberen Stellung verschließbar ist.

8. Ablageanordnung nach einem der Ansprüche 1 bis 7, dadurch gekennzeichnet, daß die Tischplatte (7) in ihrer offenen horizontalen Gebrauchsstellung arretierbar ist.

9. Ablageanordnung in einem Nutzfahrzeugfahrerhaus (2) mit Hochdach und einer innerhalb dieses vorn befindlichen oberen Liege nach einem der Ansprüche 1 bis 8, dadurch gekennzeichnet, daß das Oberteil (25) des Schrankelements (5) als Aufstieg zur oberen Liege ausgebildet ist.

10. Ablageanordnung nach Anspruch 9, dadurch gekennzeichnet, daß das Oberteil (25) durch eine bügel- bzw. winkelförmige an der Rückwand oder am Fahrerhausboden befestigte Konsole (28) verstärkt ist.

11. Ablageanordnung nach Anspruch 9 oder 10, dadurch gekennzeichnet, daß der eigentliche Aufstieg durch eine trittfeste Platte (29) oder einen rutschsicheren Bügel gebildet ist.

**Revendications**

1. Tablette de dépôt (1) pour une cabine de conducteur (2) d'un camion, agencement dans lequel une tablette pivotante (7) est disposée sur un élément d'armoire (5) placé entre le siège du conducteur et le siège du convoyeur (3, 4) devant la paroi arrière (6) de la cabine, tablette caractérisée en ce qu'elle comporte la combinaison des particularités suivantes:

a) la paroi arrière de l'élément d'armoire (5) est contiguë à la paroi arrière (6) de la cabine (2) du conducteur,

b) dans sa position essentiellement verticale, la tablette (7) constitue en même temps, une partie de recouvrement d'au moins une partie ou casier (8, 9) de l'élément d'armoire (5),

c) la tabelette (7) comporte un axe de pivotement inférieur (10) horizontal.

2. Tablette selon la revendication 1, caractérisée en ce qu'elle comporte des jambes de force (11) grâce auxquelles la tablette (7), lorsqu'elle est rabattue vers le bas dans sa position horizontale, prend appui contre l'élément d'armoire (5), les extrémités éloignées de la tablette de ces jambes de force (11) étant articulées sur une partie inférieure (27) de l'élément d'armoire (5) de façon à pouvoir pivoter, tandis que les autres extrémités de ces jambes de force (11) sont guidées dans des guidages latéraux (12) de la tablette qui comportent une butée (13).

3. Tablette selon la revendication 1 ou la revendication 2, caractérisée en ce que l'élément d'armoire (5) comporte un casier de dépôt supplémentaire ouvert (14), qui se trouve sous la tablette (7) lorsque celle-ci est rabattue vers le bas.

4. Tablette selon la revendication 3, caractérisée en ce que les deux parois latérales (15) due casier de dépôt ouvert (14) s'étendent sur le sol de la cabine ou bien le tunnel médian (16) pratiquement jusqu'au tableau de bord (17).

5. Tablette selon la revendication 4, caractérisée en ce que, dans la partie antérieure, au voisinage du tableau de bord (17), la zone de sol ou de tunnel est garnie entre les deux parois latérales (15) avec le matériau de revêtement du sol (18).

6. Tablette selon une des revendications 1 à 5, caractérisée en ce qu'au moins les deux parties latérales essentiellement verticales (19) de l'élément d'armoire (5) sont façonnées sur la paroi arrière (6) ou sur le revêtement de la paroi arrière de la carbine (2).

7. Tablette selon une des revendications 1 à 6, caractérisée en ce qu'elle est susceptible d'être verrouillée dans sa position supérieure recouvrant l'élément d'armoire (5).

8. Tablette selon une des revendications 1 à 7, caractérisée en ce qu'elle est susceptible d'être arrêtée dans sa position horizontale d'utilisation.

9. Tablette selon une des revendications 1 à 8, dans la cabine (2) du conducteur d'un camion, comportant un toit surélevé et une couchette se trouvant à l'intérieur de celui-ci, caractérisée en ce que la partie supérieure (25) de l'élément d'armoire (5) est prévue pour permettre l'accès à la couchette surélevée.

10. Tablette selon la revendication 9, caractérisée en ce que la partie supérieure (25) de l'élément d'armoire (5) est renforcée par une console (28) en forme d'étrier ou d'équerre fixée à la paroi arrière de la cabine ou bien au sol de la cabine.

11. Tablette selon la revendication 9 ou la revendication 10, caractérisée en ce que l'accès proprement dit à la couchette est constitué par une plaque (29) sur laquelle on peut marcher, ou bien par un étrier anti-dérapant.

**Claims**

1. A repository arrangement (1) for the cab (2) of a commercial vehicle, wherein a tiltable table plate (7) is arranged on a cabinet structure (5) located in front of the cab's rear wall (6) between the driver's and the co-driver's seats (3, 4), characterized by a combination of the following features;

a) the cabinet structure (5) is arranged so that its rear wall adjoins the rear wall (6) of the cab (2);

b) the table plate, if tilted into a substantially vertical position, also serves as a cover plate of at least one section or one compartment (8, 9) of the cabinet (5); and

c) the plate (7) is tiltable about a horizontally extending swivel axis (10).

2. A repository arrangement according to claim 1, characterized in that the plate (7) is provided with supporting struts (11) serving to support the plate in its tilted-down horizontal position on the cabinet (5), and in that the struts' (11) respective end portions remote from the cabinet are hingedly mounted in the lower section of the cabinet (5) while the struts' (11) other end portions are guided in respective lateral slideways (12) — each being provided with a stop (13) — of the table plate.

3. A repository arrangement according to claim 1 or claim 2, characterized in that the cabinet (5) includes an additional, open, repository compartment (14) substantially located below the plate (7) in the latter's tilted-down position.

4. A repository arrangement according to claim 3, characterized in that two side walls (15) of the open compartment (14) extend on the cab floor, more particularly the intermediate drive-shaft tunnel (16), to substantially the dashboard (17).

5. A repository arrangement according to claim 4, characterized in that the front portion — located within reach of the dashboard (17) — of the floor or tunnel area between the two side walls is covered by matting (18).

6. A repository arrangement according to any of the claims 1 to 5, characterized in that at least two — substantially vertical — side panels (19) of the cabinet (5) are joined integrally to the rear wall (6), or to the covering thereof, of the cab (2).

7. A repository arrangement according to any of claims 1 to 6, characterized in that the plate (7) is lockable in its upper position in which it covers the cabinet (5).

8. A repository arrangement according to any of claims 1 to 7, characterized in that the plate (7) is lockable in its, uncovering, horizontal position in which it is used as a table.

9. A repository arrangement for a commercial vehicle's cab (2) having a high roof and within the front region thereof an upper berth according to any of the claims 1 to 8, characterized in that the upper section (25) of the cabinet (5) is constructed to serve as an ascent to said berth.

10. A repository arrangement according to claim 9, characterized in that the upper section (25) is reinforced by a bow-shaped or angular bracket (28) fastened to the cab's rear wall or floor.

11. A repository arrangement according to claim 9 or claim 10, characterized in that a non-crush plate (29) or a non-skid stirrup serves as the actual means of ascent.

FIG.1

# FIG.2

# FIG. 3

Fig. 4

Fig. 5